Europäisches Patentamt

European Patent Office

Office européen des brevets

(11) Publication number: **0 126 796 B1**

# EUROPEAN PATENT SPECIFICATION

(45) Date of publication of patent specification: **13.05.87**

(21) Application number: **83105338.4**

(22) Date of filing: **30.05.83**

(51) Int. Cl.⁴: **F 15 B 15/20, F 15 B 15/26**

(54) Positioning control and locking device for a fluid powered actuator.

(43) Date of publication of application:
**05.12.84 Bulletin 84/49**

(45) Publication of the grant of the patent:
**13.05.87 Bulletin 87/20**

(84) Designated Contracting States:
**AT BE CH DE FR GB IT LI LU NL SE**

(56) References cited:
**EP-A-0 005 478**
**EP-A-0 070 811**
**EP-A-0 106 947**
**WO-A-81/03679**
**WO-A-82/04293**
**FR-A-2 079 871**
**GB-A-1 130 604**
**US-A-3 403 365**

(73) Proprietor: **KOWA SHOJI, LTD.**
**2-24-7 Sangenjaya Setagaya-ku**
**Tokyo (JP)**

(72) Inventor: **Kuroda, Takeshi**
**5-go, 3-ban, Higashi-Atagocho, Kure-shi**
**Hiroshima-ken (JP)**

(74) Representative: **Patentanwälte Dr. Solf & Zapf**
**Zeppelinstrasse 53**
**D-8000 München 80 (DE)**

Courier Press, Leamington Spa, England.

## Description

This invention relates to a positioning control and locking device for a fluid powered actuator according the preamble of claim 1.

In WO—A—82/04293 there is disclosed a fluid pressure linear actuator including a position indicator arrangement comprising a ball nut member fixed to the piston and being in engagement with a screw threaded shaft rotatably mounted in the housing and operatively connected to a rotational position sensor.

In operation, it is highly important that such a sliding displacement detecting apparatus functions in a very precise and reliable manner. The known construction has the problem that it is very difficult to carry out a minute and precise detecting performance.

Another known construction (EP—A—70 811) is a hydraulic jack with a mechanical safety block. This jack is provided with an anti-rotation slotted tube solid with the jack cylinder and preventing rotation of the piston itself. Two pins solid with the piston are engaged in two longitudinal slots of the anti-rotation tube. The jack is fed from the hydraulic circuit operating the jack, when the pins must be removed from the block position, while a spring acts in the direction to maintain the pins themselves still in the blocked position. This prior art brake means is not designed for a very rapid and precise stopping of the piston arrangement, but is only designed for a safety means in connection with large hydraulic equipment.

Therefore, the object underlying the invention is to provide a positioning control and locking device for a fluid powered actuator, which allows a precise detection of linear movement and a precise stopping at a desired position of the object and which functions in a reliable manner.

This object is solved by the invention providing a positioning control and locking device for a fluid powered actuator in accordance with claim 1.

The ball screw of the sliding displacement detecting apparatus in accordance with the invention is arranged in axial alignment with and secured to the tube of the slidable member in a fore-and-aft relation therewith. This arrangement is advantageous, since the ball screw can have a sufficient length, which allows accommodating a great number of balls therein. The great number of balls results in an improvement of durability of the ball screw as well as in an improved control accuracy thereof. In combination with this increased accuracy and reliability of detection, the stopping action ·of the sliding displacement apparatus in accordance with the invention is increased by selecting an electromagnetic brake, which is actuated by the rotation detector. This powerful brake allows a very accurate control of a linear movement of the slidable member.

The positioning control and locking device according to the invention comprises a screw shaft and a nut member screwed thereto which constitute a slide to rotation converter to convert a sliding movement to a rotation. One of the screw shaft and the nut member constitutes an unrotatable member fixed to a slidable member such that the unrotatable member and the slidable member have axes parallel (or aligned) to each other. The slidable member has at a forward end thereof an attaching section (i.e. a first attaching section) to be attachable to an object such as a cylinder. The slidable member is to be attached through the first attaching section to the object to be linearly movable and unrotatable, and slidable in a direction parallel to a direction in which the object makes sliding movements.

The other of the screw shaft and the nut member constitutes a rotatable member rotatable and unslidable relative to a second attaching section through which the rotatable member is attached to the object. This rotatable member is operatively connected to a rotation detector.

The rotatable member is provided with a braking means controlled by an output signal of the rotation detector.

One of the screw shaft and the nut member which constitute the slide to rotation converter, or the unrotatable member, forcibly rotates the other. The angle of rotation θ of the rotatable member is derived from an equation,

$$\theta = 360° \times \frac{L}{P}$$

wherein P is a pitch of a helical groove of the screw shaft, and L is an amount of movement of the unrotatable member or the slidable member. Thus the rotation detector may have a resolution power θ greatly increased by decreasing the pitch P.

The apparatus is usable by attaching the first and second attaching section to a fixed portion and a movable portion of the object or cylinder. An extension or constraction of the object moves the slidable member and rotates the rotatable member, an amount of its rotation being detected by the detector. This means that a displacement of the object is detected as greatly magnified and with a high degree of precision.

On the other hand, the above features all together function as follows:

When one of the screw shaft and the nut member which constitute the slide to rotation converter, or the unrotatable member, is made to slide, the other, or the rotatable member, is forced to rotate as described above. Conversely, when an external thrusting force is applied to the slidable member while the object is standing still, the rotatable member again receives a torque through the unrotatable member. The following equations may be set up:

$$F \times X = F' \times X', \text{ and } X' \gg X$$

wherein F is a thrust, X is an amount of movement of a stroke, F' is a torque, and X' is an amount of rotation. Thus the torque F' is greatly decreased compared with the thrust F. The thrust F may effectively be checked by applying a braking action to this slight torque F'.

Where the apparatus is used by attaching the first and second attaching sections to the fixed portion and the movable portion of the object or cylinder, an extension or contraction of the object may be well resisted by a braking action with a far smaller force than the force of extension or contraction. This means that the object may be locked at a stopping position reliably and positively. Besides, this stopping position is detected with high precision. In other words, the object is positively maintained by a strong braking action at a stopping position detected with high precision.

Other objects and advantages of this invention will be apparent from the following description.

Fig. 1 is a sectional view of a first embodiment,

Fig. 2 is a front view of the first embodiment detecting apparatus of Fig. 1 as attached to a cylinder, and

Fig. 3 is a sectional view of a second embodiment.

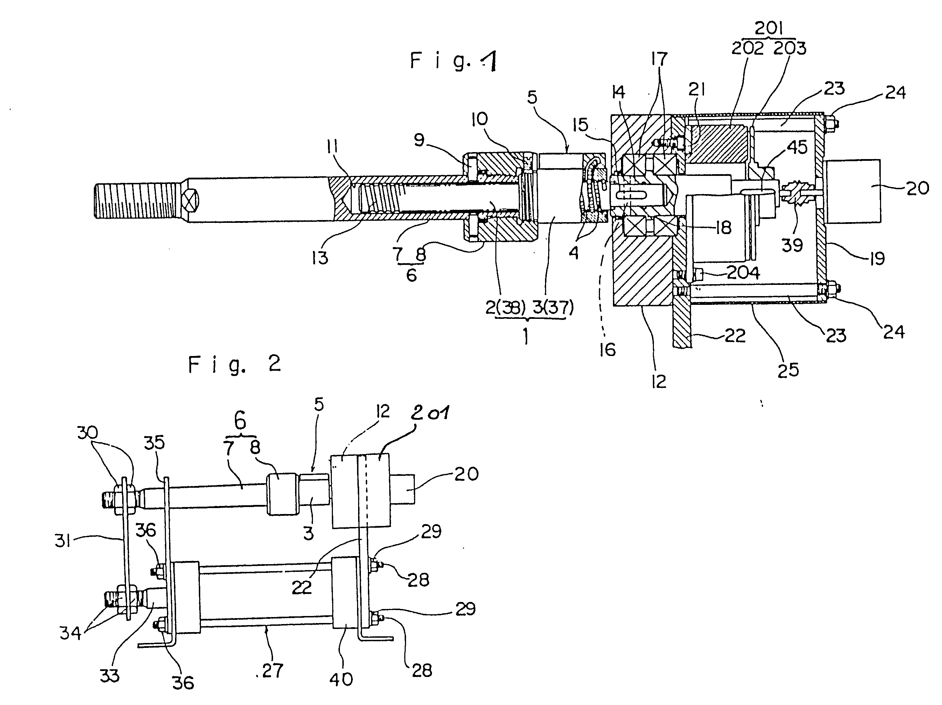

A first embodiment of this invention will now be described with reference to Figs. 1 and 2.

A slide to rotation converter 1 comprises a screw shaft 2 and a nut member 3 screwed thereto. The nut member 3 retains a plurality of balls 4 to roll along a helical groove of the screw shaft 2 while circulating within the nut member 3. In other words, the screw shaft 2 and the nut member 3 combine to constitute a ball screw 5 in this example.

A slidable member 6 comprises a rod 7 and tube 8 screwed and fixed by pins 9 to a base end thereof. The nut member 3 is screwed and fixed by a screw 10 to a rear end of the tube 8. Thus the slidable member 6 and the nut member 3 are rigidly interconnected to be immovable relative to each other. The screw shaft 2 is supported at one end thereof by an axial bore 11 of the rod 7 and at the other end by a head 12. The screw shaft 2 comprises a screwed portion 13 and an output portion 14 rigidly connected to each other by a key 15 and a pin 16. The output portion 14 is supported by the head 12 through bearings 17 and includes a flange 18 interposed between the bearings 17 thereby to be locked unslidable relative to the head 12. The screw shaft 2 and the nut member are coaxial with the slidable member 6.

A rotation detector 20 is attached to a holder 19 fixed by nuts 24 to a plurality of bolts 23 projecting from an attaching plate 22 which is bolted as at 21 to the head 12. Number 25 denotes a tubular cover.

Number 201 denotes a brake mounted on the screw shaft 2, which is an electromagnetic brake. The electromagnetic brake 201 comprises a main body 202 housing an electromagnetic attraction coil and a magnetic rotary disc 203 to be attracted thereto. The main body 202 is fixed to a mounting plate 22 by bolts 24. The disc 203 is mounted on an output shaft portion 14 to be axially slidable thereon and rotatable together with the output shaft portion 14 by means of a key 205.

The attaching plate 22 constitutes the second attaching section mentioned hereinbefore (see Fig. 2), which is penetrated by tie rods 28 of a cylinder 27, nuts 29 being used to secure the tie rods 28 to the second attaching section. On the other hand, the rod 7 of the slidable member 6 carries an attaching plate 31 secured by nuts 30 to a forward screwed portion thereof, the attaching plate 31 constituting the first attaching section mentioned hereinbefore. A piston rod 33 of the cyliner 27 extends through the attaching plate 31 and is secured thereto by nuts 34. Number 35 denotes an intermediate guide plate to guide the rod 7 of the slidable member 6. The guide plate 35 is penetrated by and secured, by nuts 36, to the tie rods 28.

In this embodiment the nut member 3 constitutes an unrotatable member 37 secured to the slidable member 6 while the screw shaft 2 constitutes a rotatable member 38. The rotation detector 20 used herein comprises a pulse encoder. Number 39 denotes a flexible coupler connecting the output portion 14 to an input shaft of the rotation detector 20.

The described construction operates as follows:

With an extension of the cylinder not shown, the slidable member 6 and the nut member 3 move leftward in the drawing. An amount of displacement of the slidable member 6 or the cylinder, including the direction, is in one to one relationship with an amount of rotation detected by the pulse encoder 20. A control signal is given by a controller (not shown) to close an electromagnetic valve mounted in a fluid circuit connected to the cylinder and at the same time actuate the electromagnetic brake 201 when the detected value agrees with a predetermined value of rotation.

With a contraction of the cylinder the screw shaft 2 is rotated in a direction opposite to that in the above case, and an amount of its rotation is detected by the detector 20. When the detected amount reaches the predetermined value, the electromagnetic valve is closed thereby to actuate the brake.

This embodiment may be modified as follows:

(i) The rotation detector 20 may comprise anything other than the pulse encoder.

(ii) The controller may include a plurality of objects inkluding the brake for its control action which is given when the rotation detector 20 is input.

(iii) The mode of attachment to the cylinder of the first attaching section and the second attaching section may be reversed, whereby the first attaching section is attached adjacent the head cover and the second attaching section is attached to the piston rod of the cylinder.

Thus this embodiment produces the following effects:

By attaching this apparatus to an object such as a cylinder a strong braking action is applied at a detected stopping position. Moreover, the brake needs a smaller driving energy than in the prior art. It does not matter whether the object to hich the apparatus is attached is an existing instrument or a newly manufactured instrument. This instrument may of course be a pneumatic cylinder or a hydraulic cylinder.

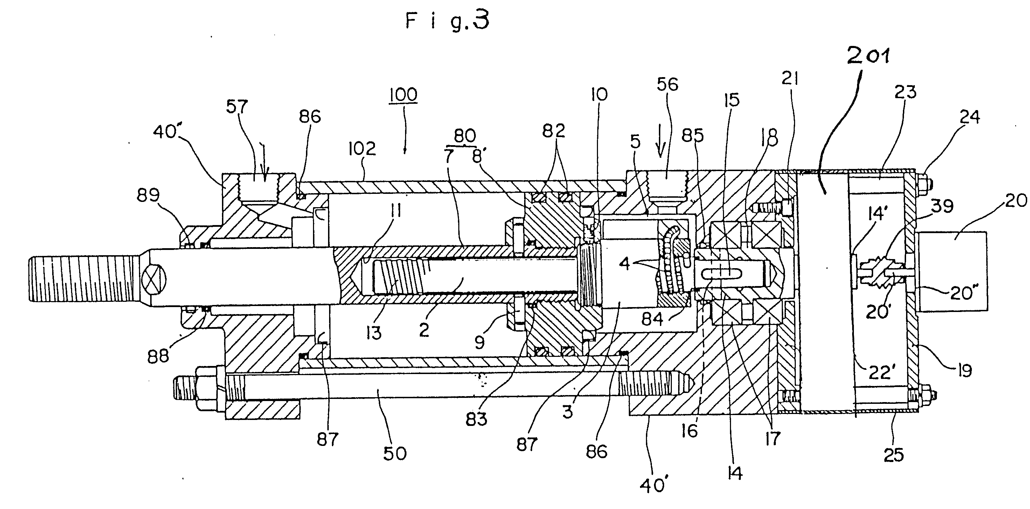

A second embodiment will now be described with reference to Fig. 3.

In this embodiment a slide to rotation converter is assembled into a fluid pressure cylinder as a component thereof. That is to say, a fluid pressure cylinder is provided which incorporates the detector according to the first embodiment as a component. This second embodiment has the following constructional principles:

A piston member comprising a piston and a piston rod is mounted in a cylinder body. A nut member identical or similar to the nut member in the preceding embodiments is fixed to the piston member. The nut member and a screw shaft identical or similar to the screw shaft in the preceding embodiments have an axis parallel or aligned to a direction of movement of the piston member.

The screw shaft to which the nut member is screwed is mounted in the cylinder body to be rotatable and unslidable relative thereto. The screw shaft is operatively connected to a rotation detector.

Components shown in Fig. 3 corresponding to those shown in Figs. 1 and 2 are affixed with like numerals and are not described again. A cylinder body 100 comprises a cylinder tube 102, a head cover 40' and a rod cover 40''. Number 50 denotes tie rods and Numbers 56 and 57 denote inlet and outlet ports for a pressure fluid, i.e. oil or air. A piston member 80 which corresponds to the slidable member 6 in the first embodiment consists of a combination of a piston 8' and a piston rod 7. When this cylidner is attached to another object, the piston member 80 is locked against rotation relative to the cylinder body 100. Number 82 denotes piston packings, and number 83 denotes a piston gasket. A screw shaft 2 comprising a screw portion 13 and an output portion 14 is supported at one end thereof by the head cover 40'. Number 84 denotes an O-ring, and number 85 denotes a packing, both acting to stop leakage of the pressure fluid. The output portion 17 has a flange 18 to lock the screw shaft 2 against displacement relative to the cylinder body 100.

The output portion 14 of the screw shaft 2 extends through the head cover 40' and a plate 22', with a projecting portion 14' thereof connected through a flexible coupler 39 to a driven portion 20' of a rotation detector 20. ·

The rotation detector or pulse encoder 20 is fixed at a fixing portion 20'' thereof to a holder 19.

Number 86 denotes a tube gasket, number 87 denotes a cushion ring, number 88 denotes a rod packing, and number 89 denotes a dust wiper.

This cylinder operates as follows:

With introduction of the pressure fluid via the inlet and outlet port 56, the piston member 80 and the nut member 3 move leftward in the drawings, which rotates the screw shaft 2, an amount of its rotation being detected by the detector 20. When the fluid is introduced through the other inlet and outlet port 57, the screw shaft 2 rotates in a direction opposite to that in the above case, and an amount of its rotation is detected by the detector 20.

The above second embodiment may be modified as follows:

(i) Means to lock the piston member 8 against rotation relative to the cylinder body 100.

    1. A rod extending through the piston member is supported by the cylinder body.

    2. The piston rod 7 and the rod cover 40'' have a noncircular section.

    3. The piston 8' and the tube 102 have a noncircular section.

(ii) Attachment of the nut member 3 to the piston member 80.

    1. The nut member is axially disaligned from the piston member while retaining a parallel relationship therebetween.

    2. The nut member is attached to the piston rod 7.

(iii) The rotation detector 20 is not limited to the pulse encoder.

(iv) The controller which receives signals from the rotation detector 20 is not limited in what it controls.

As will be understood from the foregoing description, in the second embodiment movement of the piston member caused by applying or removing fluid pressure moves the nut member at the same time, which rotates the screw shaft. Therefore, a displacement of the piston member relative to the cylinder body is detected with a high degree of precision. Consequently, the invention facilitates a high precision control of the cylinder per se or some other mechanism operable in association with this cylinder. Further, troublesome work heretofore required when attaching the detector to a separate cylinder is no longer necessary, for according to the invention the detector is assembled together with the cylinder body as a component of the cylinder from the start, to detect a displacement of the piston member. Therefore, good initial assembly work is adequate and requires no troublesome operation at a later stage of actual use. Besides, this construction is free from control errors due to inaccuracy of assembly.

## Claims

1. Positioning control and locking device for a fluid powered actuator including a sliding displacement detecting device comprising a screw shaft (2) constituting a rotatable member and having a helical groove; a nut member (3) retaining a plurality of balls adapted to roll along the helical groove; the screw shaft and the nut member constituting a ball screw serving as a slide to rotation convertor (1); a rod (7) having an axial bore (11) rotatably supporting a screwed portion of the screw shaft (2); a tube (8) secured to the rod; the rod and the tube constituting a slidable member (6), and the nut member being secured to the rod; a head (12) rotatably supporting an output portion (14) of the screw shaft; and a rotation detector (20) operatively connected to the output portion, characterized in that the nut member (3) is in axial alignment with and secured to the tube (8) in fore-and-aft relation therewith so as to retain a great number of balls (4) for circulation inside said nut member (3); that an electromagnetic brake (201) is provided comprising a main body (202) housing an electromagnetic attraction coil, and a magnetic rotary disc (203) to be attracted thereto when the coil is energized, the main body (202) being fixed to the head (12) and the disc (203) being mounted on the output portion (14) of the screw shaft (2); and that an amount of rotation being detected by the detector (20) so as to actuate the electromagnetic brake (201), when the detected value agrees with a predetermined value of rotation.

2. Positioning control and locking device as defined in claim 1, characterized in that the magnetic rotary disc (203) is mounted on the output portion (14) of the screw shaft (2) to be axially slidable thereon and rotatable together with the output portion (14).

3. Positioning control and locking device as defined in claim 1 or 2, charcterized in that the rotation detector (20) comprises a pulse encoder.

4. Positioning control and locking device as defined in any of claims 1 to 3, characterized in that the device further comprises an attaching plate (31) secured to the rod (7) and a further attaching plate (22) secured to the head (12), wherein these attaching plates (31, 22) are connected to a cylinder (27) and a piston rod (33) of the actuator, respectively.

5. Positioning control and locking device as defined in any of claims 1 to 3, characterized in that it is assembled into the actuator as a component thereof; the actuator comprising a cylinder body (100) including a cylinder tube (102), a rod cover (40'') slidably receiving the rod (7), a head cover (40') and a piston (8') carrying said rod (7); the screw shaft (2) being mounted in the head cover (40') to be rotatable and unslidable relative thereto; an inlet and outlet port (56) provided in the head cover (40'); and a further inlet and outlet port (57) provided in the rod cover (40''), wherein the slidable piston member (80; 7, 8') is adapted to move in a direction and in an opposite direction with introduction of pressure fluid via the inlet and outlet port (56) and via the further inlet and outlet port (57), respectively.

## Patentansprüche

1. Vorrichtung zum Festlegen eines fluidbetätigten Stellantriebs in einer vorgegebenen Position mit einem Fühler zur Erfassung eines Gleitbetrages, umfassend eine Schraubenspindel (2), die ein Drehelement darstellt und eine schraubenlinienförmige Nut aufweist; ein mehrere zum Abrollen längs der schraubenförmigen Nut geeignete Kugeln aufnehmendes Mutterelement (3), wobei die Schraubenspindel und das Mutterelement eine als Geit-Drehwandler (1) dienende Kugelumlaufspindel darstellen; eine Stange (7) mit einer axialen Bohrung (11) zur drehbaren Lagerung eines Gewindeabschnitts der Schraubenspindel (2); ein an der Stange befestigtes Rohr (8), wobei die Stange und das Rohr ein Gleitelement (6) darstellen und das Muttterelement an der Stange befestigt ist; einen Kopf (12) zur drehbaren Lagerung eines Abtriebsabschnitts (14) der Schraubenspindel; und einen betriebsmäßig mit dem Abtriebsabschnitt verbundenen Drehfühler (20), dadurch gekennzeichnet, daß das Mutterelement (3) axial mit dem Rohr (8) ausgerichtet und daran nach vorne und hinten befestigt ist und eine große Anzahl, auf seiner Innenseite umlaufende Kugeln aufnimmt; daß eine elektromagnetische Bremse (201) vorgesehen ist, die ein Hauptgehäuse (202) zur Aufnahme einer elektromagnetischen Zugspule und eine im Fall der Erregung der Spule daran anziehbare magnetische Drehscheibe (203) umfaßt, wobei das Hauptgehäuse (202) am Kopf (12) befestigt und die Scheibe (203) am Abtriebsabschnitt (14) der Schraubenspindel angebracht ist, und daß ein Drehbetrag vom Drehfühler (20) so erfaßt wird, daß die elektromagnetische Bremse (201) betätigt wird, wenn der erfaßte Betrag mit einem vorbestimmten Drehbetrag übereinstimmt.

2. Vorrichtung zum Festlegen eines fluidbetätigten Stellantriebs in einer vorgegebenen Position nach Anspruch 1, dadurch gekennzeichnet, daß die magnetische Drehscheibe (203) an dem Abtriebsabschnitt (14) der Gewindespindel (2) darauf axial verschiebbar und zusammen mit dem Abtriebsabschnitt (14) drehbar befestigt ist.

3. Vorrichtung zum Festlegen eines fluidbetätigten Stellantriebs in einer vorgegebenen Position nach Anspruch 1 oder 2, dadurch gekennzeichnet, daß der Drehfühler (20) einen Impulscodierer umfaßt.

4. Vorrichtung zum Festlegen eines fluidbetätigten Stellantriebs in einer vorgegebenen Position nach einem der Ansprüche 1 bis 3, dadurch gekennzeichnet, daß die Vorrichtung weiter eine an der Stange (7) befestigte Befestigungsplatte (31) und eine weitere an dem Kopf (12) befestigte Befestigungsplatte (22) umfaßt, wobei diese Befestigungsplatten (31, 22) mit einem Zylinder (27) bzw. einer Kolbenstange (33) des Antriebs verbunden sind.

5. Vorrichtung zum Festlegen eines fluidbetätigten Stellantriebs in einer vorgegebenen Position nach einem der Ansprüche 1 bis 3, dadurch gekennzeichnet, daß sie im Betätigungsteil als Teil davon angeordnet ist; daß das Betätigungsteil ein Zylindergehäuse (100) mit einem Zylinderrohr (102), einem die Stange (7) gleitend aufnehmenden Stangendeckel (40''), einem Kopfdeckel (40') und einem die Stange (7) trangenden Kolben (8') umfaßt, wobei die Schraubenspindel (2) relativ zum Kopfdeckel (40') drehbar und nicht gleitbar im Kopfdeckel (40') angebracht ist; daß im Kopfdeckel (40') eine Einlaß- und Auslaßöffnung (56) vorgesehen ist, und daß eine weitere Einlaß-und Auslaßöffnung (57) in dem Stangendeckel (40'') vorgesehen ist, wobei sich das gleitbare Kolbenelement (80; 7, 8') in einer Richtung und einer dazu entgegengesetzten Richtung bei der Einführung eines Druckfluids durch die Einlaß- und Auslaßöffnung (56) bzw. durch die weitere Einlaß- und Auslaßöffnung (56) bzw. durch die weitere Einlaß- und Auslaßöffnung (57) bewegen kann.

**Revendications**

1. Dispositif de commande de position et de blocage pour un actionneur opéré par un fluide, comprenant un dispositif de détection d'un coulissement muni d'une tige filetée (2) constituant un organe rotatif et muni d'une rainure hélicoïdale; un écrou (3) logeant une pluralité de billes aptes à rouler le long de la rainure hélicoïdale; la tigè filetée et l'écrou formant une vis à billes servant de convertisseur (1) d'un mouvement coulissant en un mouvement de rotation; une tige (7) munie d'un alésage axial (11) dans lequel est fixée de manière rotative une portion filetée de la tige filetée (2); un tube (8) fixé sur la tige; la tige et le tube constituant un organe coulissant (6) et l'écrou étant fixé sur la tige; une tête (12) dans laquelle est fixée de manière rotative une portion de sortie (14) de la tige filetée; et un détecteur de rotation (20) relié opérativement à la portion de sortie, caractérisé en ce que l'écrou (3) est axialement aligné avec et fixé sur le tube (8), de manière à permettre un mouvement de va et vient par rapport à celui-ci, afin de loger un grand nombre de billes (4) circulant à l'intérieur dudit écrou (3); qu'il est prévu un frein électro-magnétique (201) comprenant un corps principal (202) logeant une bobine d'attraction électromagnétique et un disque rotatif magnétique (203) attiré par celle-ci lorsque la bonine est excitée, le corps principal (202) étant fixé à la tête (12) et le disque (203) étant monté sur la portion de sortie (14) de la tige filetée (2); et qu'une certaine valeur de rotation est détectée par le détecteur (20) pour actionner le frein électro-magnétique (201) lorsque la valeur détectée coïcide avec une valeur prédéterminée de rotation.

2. Dispositif de commande de position et de blocage selon la revendication 1, caractérisé en ce que le disque rotatif magnétique (203) est monté sur la portion de sortie (14) de la tige filetée (2) pour coulisser axialement sur celle-ci, en même temps que la portion de sortie (14).

3. Dispositif de commande de position et de blocage selon la revendication 1 our 2, caractérisé en ce que le détecteur de rotation (20) comprend un codeur d'impulsions.

4. Dispositif de commande de position et de blocage selon l'une des revendications 1 à 3, caractérisé en ce que le dispositif comprend en outre une plaque de fixation (31) fixée à une tige (7) et une autre plaque de fixation (22) fixée à une tête (12), ces plaques de fixation (31, 22) étant respectivement reliées à un cylindre (27) et à une tige de piston (33) de l'actionneur.

5. Dispositif de commande de position et de blocage selon l'une quelconque des revendications 1 à 3, caractérisé en ce qu'il est monté dans l'actionneur en tant que composant de celui-ci, l'actionneur comprenant un corps de cylindre (100) muni d'un tube de cylindre (102), d'un capot de tige (40'') dans lequel peut tourner la tige (7), d'un capot de tête (40') et d'un piston (8') qui actionne ladite tige (7), la tige filetée (2) étant montée dans le capot de tête (40') de manière à pouvoir entrer en rotation par rapport à celui-ci, mais non coulisser, une ouverture d'admission et de sortie (56) prévue dans le capot de tête (40') et une autre ouverture d'admission et de sortie (57) prévue dans le capot de la tige (40'') dans lequel un ensemble piston coulissant (80, 7, 8') est apte à se déplacer dans deux sens opposés lorsqu'on introduit un fluide de pression respectivement à travers l'ouverture d'admission et de sortie (56) et l'autre ouverture d'admission et de sortie (57).

Fig. 1

Fig. 2

0 126 796

Fig.3